# EUROPEAN PATENT APPLICATION

(11) **EP 1 396 660 A2**
(43) Date of publication of application: **10.03.2004**
(21) Application number: 03019228.0
(22) Date of filing: 26.08.2003
(51) Int. Cl.: F16H 3/66, F16H 57/08

(54) **An imbricate type epicyclic reduction gear**

(30) Priority: 03.09.2002 IT PD20020223
(71) Applicant: CARRARO S.P.A., I-35011 Campodarsego (Padova) (IT)
(72) Inventor: Cesaroni, Antonio Francisco, 35010 Vigodarzere (IT)
(74) Representative: Fabris, Stefano (IT)

(57) **Abstract**

An imbricate type epicyclic reduction gear comprises a drive input shaft (3), on which a sun gear (6), a plurality of planetary gears (7) having a first set of teeth (9) which are rotatingly engaged between the sun gear (6) and a first fixed ring gear (11) are mounted. There is provided on the planetary gears (7) a second set of teeth (10) which is adjacent to and coaxial with the first set of teeth, but having a different diameter therefrom, and which is engaged with a second ring gear (12) which is associated with a drive output shaft (4). The first and the second sets of teeth are of the helical type having mutually different helix angles (A, B) and the planetary gears can be moved axially relative to the sun gear and the ring gears.

## Description

The present invention relates to an imbricate type epicyclic reduction gear according to the features set out in the preamble of the principal claim.

The present invention is used in particular, though not exclusively, in the field of production of axles for electric trucks, which gives rise to the necessity for producing axles having a reduction gear having a very high reduction relationship while still minimising production costs and reducing dimensions as a whole.

This necessity results from the desire to replace, in electric trucks, the conventional direct current motors with alternating current motors, which operate, however, at a number of revolutions which is normally higher. Therefore, this change would lead to the need to increase substantially the transmission relationship of the reduction gear which is fitted in the axle without adversely affecting the costs and the total spatial requirements of the axle.

One possible solution can be obtained from the specific technical field of drive transmission systems, in which a particular type of epicyclic reduction gear, of the so-called imbricate type, is known.

This type of reduction gear comprises a sun gear which is keyed to the drive input shaft and a plurality of planetary gears having a first set of teeth which are rotatingly engaged between the sun gear and a first fixed ring gear. The planetary gears are further provided with a second set of teeth which is adjacent to and coaxial with the first, but which has a different pitch diameter, and which is engaged with a second ring gear which is caused to rotate on the drive output shaft. By varying the difference in diameter of the two sets of teeth, it is possible, in a purely theoretical way, to obtain a transmission ratio high at will.

However, the known epicyclic reduction gears of the type described have a great disadvantage which limits the potential use thereof. Owing to the structural configuration thereof, in fact, they would need to be processed with tolerances of virtually zero in order to operate in an optimum manner with an even distribution of the torque across the various planetary gears. In reality, however, owing to the inevitable presence of play and geometrical differences between the various gears of the reduction gear, it is found that normally only one of the planetary gears is in engagement with the sun gear and the ring gears, the others remaining disengaged. As a result, in the design phase each of the planetary gears must be dimensioned to withstand the maximum torque transmitted by the reduction gear. This leads to an undesirable over-dimensioning of the reduction gear, with an evident negative impact on costs and overall dimensions.

The problem addressed by the present invention is to provide an imbricate type epicyclic reduction gear which is structurally and functionally designed to overcome the limits set out above with reference to the prior art referred to.

This problem is solved by the invention by means of a reduction gear produced according to the appended claims.

The features and advantages of the invention will be better appreciated from the detailed description of one preferred embodiment which is illustrated purely by way of non-limiting example with reference to the appended drawings, in which:
- Figure 1 is a longitudinal sectioned view of an axle comprising an imbricate type epicyclic reduction gear produced according to the present invention,
- Figure 2 is a side view of a detail of the reduction gear of Figure 1.

An axle comprising an imbricate type epicyclic reduction gear 2 produced according to the present invention is generally indicated 1 in the Figures.

The reduction gear 2 comprises a drive input shaft 3 and a drive output shaft 4 which is connected to a hub 5 of the axle 1, all of which extend along a longitudinal axis of rotation X.

The reduction gear 2 comprises a sun gear 6 (abbreviated to "sun" hereinafter) which is keyed to a free end 3a of the drive input shaft 3 and which engages with a plurality of planetary gears 7 (abbreviated to "planets" hereinafter), for example, 3 thereof, which are arranged with regular angular spacing in a carrier 8 which is rotatingly supported at one end 4a of the drive output shaft 4.

Each satellite 7 comprises a first set of teeth 9 which engages both with the sun 6 and with a first ring gear 11 which is fixed to and substantially concentric with the sun 6, and a second set of teeth 10 which in turn engages with a second ring gear 12 which is firmly fixed in terms of rotation to the drive output shaft 4. The sets of teeth 9 and 10 have diameters D1 and D2 which are different from each other, and in particular diameter D1 relating to the set of teeth 9 is greater than diameter D2 relating to set of teeth 10, so as to allow the reduction in the number of revolutions which is transmitted by the drive input shaft 3 in accordance with the typical structural configuration of the imbricate type epicyclic reduction gear.

It is provided in the preferred embodiment described here that the sun 6, the first and second sets of teeth 9, 10 of the three planets 7, the first ring gear 11 and the second ring gear 12 carry 18, 30, 21, 78 and 69 teeth, respectively.

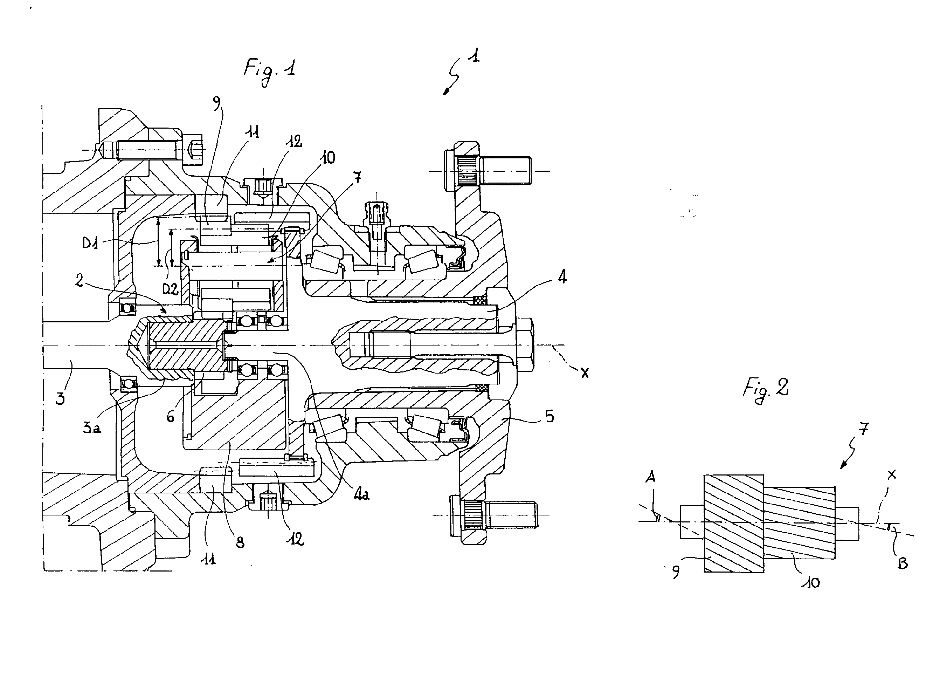

According to a principal feature of the reduction gear of the invention, the planets 7 are mounted in a sliding manner on the carrier 8 so as to be axially movable along axis X relative to the sun 6 as well as relative to the first ring gear 11 and second ring gear 12. In addition, the sets of teeth 9 and 10 of the planets are advantageously of the helical type, having mutually different helix angles A and B (see Figure 2).

Owing to these features, the reduction gear 2 is able to compensate for the play and dimensional tolerances of the various gears thereof.

In fact, if one of the sets of teeth 9, 10 of any of the planets 7 were not, by virtue of the processing tolerances, in contact with the corresponding set of teeth of the sun 6 or the second ring gear 12, there would be generated, by the engaging set of teeth, axial forces which would tend to move the entire planet 7 along axis X until contact is achieved between the sets of teeth which are not engaging. Once the planet has been moved until simultaneous contact of both of the sets of teeth 9 and 10 has been achieved, the system naturally tends to attain a state of equilibrium.

In fact, it should be known that the axial component of the forces applied to each planet 7 by the sun 6 and by the second ring gear 12 have opposite signs. Thus, by advantageously dimensioning the respective helix angles A and

B, it is possible to arrive, for each planet 7, at a state of equilibrium, in which the axial component of the forces is zero.

The selection of the helix angles A and B is carried out in accordance with the relationship of the diameters of the sets of teeth 9 and 10 as well as the torque to be transmitted via the reduction gear. In particular, for a given torque being transmitted, a precise helix angle B corresponds to each helix angle A.

During the drive transmission, therefore, each planet 7 is automatically moved axially to a position which allows the engagement of both of the sets of teeth 9 and 10 so that engagement is produced both with the sun 6 and with the second ring gear 12 which is associated with the drive output shaft 4. In this manner, it is possible to compensate for the inevitable play produced by the various tolerances between the gears, allowing the simultaneous meshing of all of the planets and consequently an even distribution of the torque transmitted via the reduction gear 2.

Therefore, the present invention solves the problem set out above with reference to the prior art cited, at the same time providing all of the known advantages of using an imbricate type epicyclic reduction gear, in particular the high transmission relationship and the low level of component complexity, without, however, meeting with the typical disadvantages, such as over-dimensioning of the planets and the processing precision. In this manner, it is possible to produce a low-cost reduction gear having small dimensions and a high transmission relationship.

## Claims

1. An imbricate type epicyclic reduction gear (2) comprising a drive input shaft (3), on which a sun gear (6), a plurality of planetary gears (7) having a first set of teeth (9) which are rotatingly engaged between the sun gear (6) and a first fixed ring gear (11) are mounted, there being provided on the planetary gears (7) a second set of teeth (10) which is adjacent to and coaxial with the first set of teeth, but having a different diameter therefrom (D1, D2), the second set of teeth being engaged with a second ring (12) gear which is associated with a drive output shaft (4), **characterized in that** the first and second sets of teeth (9, 10) are of the helical type having mutually different helix angles (A, B), and **in that** the planetary gears (7) can be moved axially relative to the sun gear (6) and the first and second ring gears (11, 12).

2. A reduction gear according to claim 1, wherein the helix angles (A, B) are such that the axial components of the forces acting on the planetary gears are zero in total.

3. An axle, in particular for electric trucks, **characterized in that** it comprises an imbricate type epicyclic reduction gear (2) according to claims 1 or 2.
